Europäisches Patentamt

European Patent Office

Office européen des brevets

(19)

(11) Numéro de publication: **0 021 962**
**A1**

(12) ## DEMANDE DE BREVET EUROPEEN

(21) Numéro de dépôt: **80400859.7**

(22) Date de dépôt: **13.06.80**

(51) Int. Cl.³: **A 01 G 9/12**

(30) Priorité: **15.06.79 FR 7915340**

(43) Date de publication de la demande:
**07.01.81 Bulletin 81/1**

(84) Etats Contractants Désignés:
**AT BE CH DE FR GB IT LI LU NL SE**

(71) Demandeur: **TECHNIFLORE**
**5bis rue d'Ablon**
**F-91200 Athis-Mons, Essonne(FR)**

(72) Inventeur: **See, Jacques Léon Alexandre**
**16 A rue Jean Mermoz**
**Deauville, Calvados(FR)**

(72) Inventeur: **Micault, Jean-Paul Léon Lucien Antoine**
**5 bis rue d'Ablon**
**Athis-Mons, Essonne(FR)**

(74) Mandataire: **Lepeudry-Gautherat, Thérèse et al,**
**Cabinet Armengaud Jeune Casanova, Akerman,**
**Lepeudry**
**23 boulevard de Strasbourg F-75010 Paris(FR)**

(54) **Support tel que tuteur pour végétaux.**

(57) Un ensemble selon l'invention comprend des éléments linéaires 1, 2, 3 et 4 et des éléments plans 5 et 6 traversés de trous 7 et 8.

Après avoir engagé les éléments linéaires dans les trous alignés 7 et 8 des deux éléments plans 5 et 6, on fait tourner l'un par rapport à l'autre les éléments 5 et 6 pour que les éléments linéaires 1, 2, 3 et 4 se trouvent placés obliquement et se croisent dans une zone située entre les deux éléments plans 5 et 6.

Cet ensemble doit être fiché dans la terre et constitue un tuteur ou un support pour treillage par exemple d'une très grande stabilité tout en étant obtenu d'une manière économique par l'association d'éléments simples et légers.

Les éléments linéaires 1, 2, 3 et 4 peuvent être obtenus en matière synthétique dans une filière tandis que les éléments 5 et 6 peuvent être obtenus en matière synthétique moulée.

*Fig. 2*

Croydon Printing Company Ltd.

1

## Support tel que tuteur pour végétaux

Les tuteurs qui existent actuellement pour le maintien des végétaux au cours de leur croissance sont en général constitués d'une simple tige verticale enfoncée dans la terre.

Cette tige peut être un piquet de bois, un bambou ou une tige en matière synthétique.

Dans tous les cas, un tel support est relativement peu stable surtout s'il est enfoncé dans une terre très meuble ou selon une faible profondeur.

De tels supports sont nécessaires non seulement pour le maintien des végétaux mais, par exemple, pour maintenir verticalement une clôture constituée elle-même d'un treillage, d'un grillage ou d'un filet.

Dans ce dernier cas, on comprend que la stabilité de l'ensemble support-clôture doit être impérativement assurée malgré les efforts très importants que le vent exerce sur la clôture surtout lorsque celle-ci est formée par un grillage ou treillage à mailles fines. Pour résister à cet effort de basculement, on est obligé de prévoir des montants extrêmement rigides et lourds tels des poteaux en ciment ou des piquets enfoncés très profondément dans la terre.

Il n'existe donc pratiquement aucun moyen bon marché, léger et facile à mettre en place qui procure en même temps une très grande stabilité verticale malgré les efforts de renversement, que l'effort de renversement provienne du vent dans le cas d'une clôture ou des sollicitations des végétaux dans le cas des tuteurs.

La présente invention apporte une solution nouvelle à ce problème en permettant d'obtenir un support léger, bon marché et très stable.

2

Un ensemble conforme à l'invention, destiné
à constituer un support substantiellement vertical tel
qu'un tuteur pour les végétaux, un piquet pour des grillages, des filets et analogues se caractérise en ce qu'il
comprend au moins deux éléments linéaires et au moins
deux éléments plans traversés par des trous qui doivent
recevoir les éléments linéaires.

L'invention sera bien comprise par la description détaillée ci-après faite en référence au dessin annexé. Bien entendu, la description et le dessin ne sont
donnés qu'à titre d'exemple indicatif et non limitatif.

Les figures 1 et 2 sont des vues schématiques
montrant un support conforme à l'invention dans deux positions caractéristiques.

Les figures 3 et 4 sont deux vues schématiques
d'un mode de réalisation particulier de l'invention.

Les figures 5 et 6 sont des vues schématiques
montrant deux variantes d'utilisation d'un support conforme à l'invention.

La figure 7 est une vue schématique partielle
montrant l'utilisation d'ensembles conformes à l'invention pour le maintien d'une clôture.

La figure 8 est une vue schématique partielle
d'une variante de réalisation de l'invention.

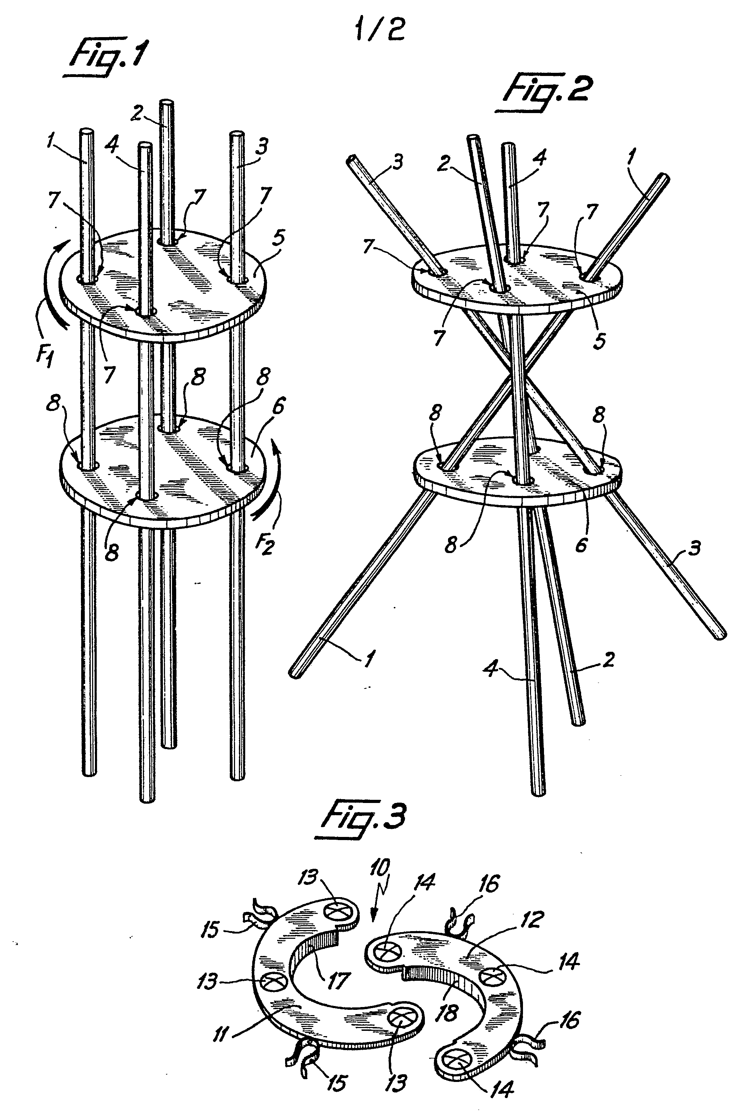

En se reportant aux figures 1 et 2, on voit
qu'un ensemble conforme à l'invention comprend quatre
éléments linéaires 1, 2, 3 et 4 et deux éléments plans 5
et 6 traversés par des trous respectivement 7 pour l'élément 5, et 8 pour l'élément 6.

Le diamètre des trous 7 et 8 est tel que les
éléments linéaires 1, 2, 3 et 4 s'y engagent facilement
avec un certain jeu.

On voit sur la figure 1 que l'ensemble ainsi
constitué n'a aucune rigidité et aucune tenue particulière.

Mais lorsqu'ayant constitué cet ensemble on
fait tourner les éléments plans 5 et 6 selon les flèches
F1 et F2 (ou selon l'une seulement de ces deux directions pour un élément tandis que l'autre est maintenu immobile) on obtient un ensemble tel qu'il est représenté sur la figure 2.

A la suite du pivotement relatif des éléments plans 5 et 6, les éléments linéaires 1, 2, 3 et 4 se sont inclinés et se croisent tous à un même niveau situé, bien entendu, entre les deux éléments plans 5 et 6 et s'étendent ainsi obliquement par rapport aux éléments plans 5 et 6.

Dans cette position, cet ensemble est plus rigide que lorsqu'il est dans la position de la figure 1 car les éléments linéaires sont chacun bloqués par frottement dans les deux trous qu'ils traversent et qui appartiennent l'un à l'élément 5 et l'autre à l'élément 6. Cet effet de blocage est obtenu en choisissant convenablement le diamètre des trous 7 et 8.

Cependant un tel ensemble en lui-même n'est pas définitivement fixé et il serait possible, par exemple, qu'à la suite d'efforts d'élasticité dûs aux éléments linéaires, les deux éléments 5 et 6 tentent à pivoter dans le sens inverse du précédent ce qui conduirait à un relâchement des éléments linéaires qui pourraient alors se désunir.

Si un tel ensemble devait donc n'être que posé sur un sol relativement dur il serait nécessaire de garantir le maintien de ces composants (éléments linéaires et éléments plans) dans la position de la figure 2. Ceci peut être obtenu par tous moyens tels qu'un simple lien réunissant les éléments plans 5 et 6.

En revanche, lorsqu'un tel ensemble est destiné, comme le prévoit essentiellement l'invention, à être enfoncé dans la terre on voit que lorsqu'il est dans la position de la figure 2 il est fortement maintenu dans cette position puisque les éléments linéaires 1, 2, 3 et 4 sont chacun immobilisés dans leur position par la terre elle-même.

Dès lors, au lieu de disposer d'un simple support vertical on dispose d'un ensemble multi-podes (ici quadri-podes) dont la résistance au basculement est extrêmement importante.

Sur les figures 1 et 2, les éléments plans 5 et 6 sont constitués chacun par un disque plein traversé de trous.

Il en résulte, bien évidemment, qu'il ne subsiste aucun espace central alors qu'un tel espace peut être désiré spécialement lorsque cet ensemble est destiné à constituer un tuteur pour des végétaux.

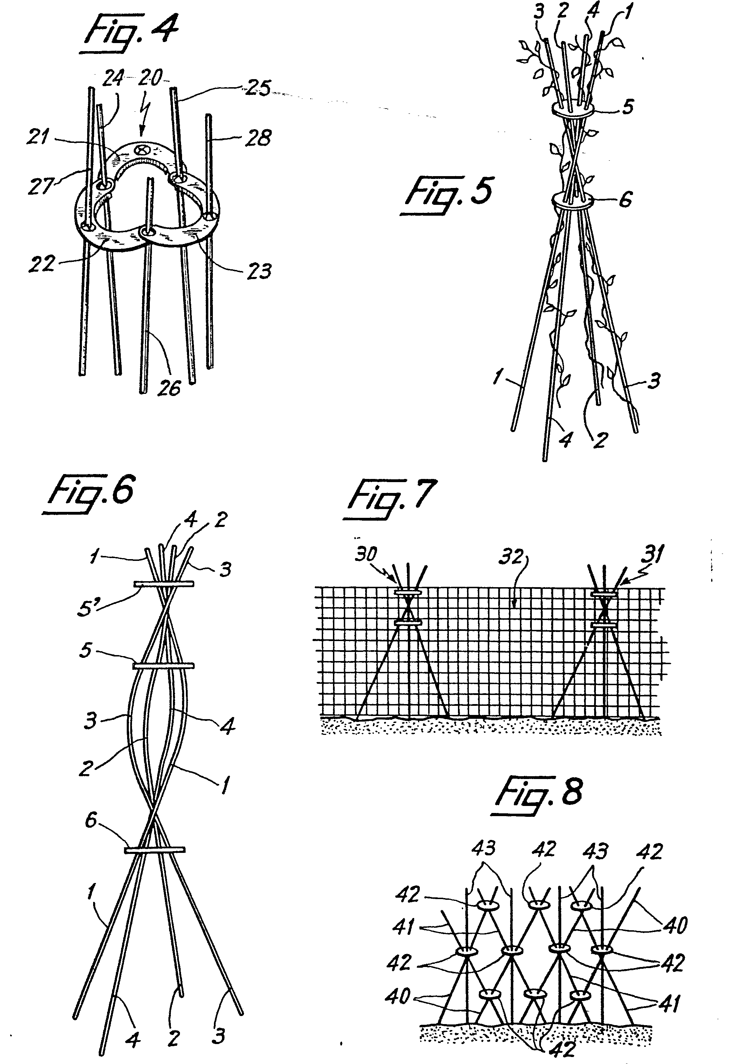

C'est pourquoi, en se reportant maintenant aux figures 3 et 4, on voit un mode de réalisation selon lequel les éléments plans sont constitués chacun par au moins deux arcs qui doivent être associés de telle manière qu'un même élément linéaire traverse deux trous alignés appartenant chacun à un arc.

On voit ainsi sur la figure 3 qu'un élément plan 10 est formé de deux arcs 11 et 12 indépendants et traversés chacun de trois trous respectivement 13 pour l'élément 11 et, 14 pour l'élément 12. Ici, chacun de ces trous 13 et 14 est formé par une fente en croix dans une membrane relativement mince, cette membrane comme les arcs eux-mêmes, étant obtenue par moulage d'une matière synthétique, en une seule pièce.

Les éléments 1, 2, 3 et 4 qui sont appelés à traverser les trous 13 et 14 repoussent élastiquement les languettes qui subsistent de part et d'autre de la fente en croix, comme cela est connu en soi, et l'on obtient de la sorte des trous dont le diamètre intérieur s'adapte automatiquement au diamètre extérieur des éléments 1, 2, 3 et 4, qu'il s'agisse de leur diamètre nominal lorsqu'ils sont dans la position de la figure 1, ou de leur diamètre apparent lorsqu'ils sont dans la position de la figure 2.

Avec ce mode de réalisation, lorsqu'on n'utilise que deux arcs comme c'est le cas de la figure 3, on dispose en regard les deux trous 13 et les deux trous 14 situés près des extrémités des arcs 11 et 12 afin qu'un seul élément linéaire traverse à la fois un trou 13 et un trou 14 situés en regard tandis que les deux autres éléments linéaires ne traversent soit que le trou 13 de l'élément 11 situé en son milieu, soit que le trou 14 de l'élément 12 situé en son milieu.

Lorsque l'on a procédé comme il vient d'être dit pour deux éléments 10 superposés, on se retrouve dans la même situation que celle qui est représentée sur la figure 1 et l'on agit comme il est décrit plus haut pour obtenir la position de la figure 2.

Mais ici, à la différence du mode de réalisation précédent, il subsiste au centre de l'ensemble un espace qui est constitué par la partie centrale vide des arcs 11 et 12 de sorte que l'on peut, par exemple, faire passer des branches d'un végétal à l'intérieur des éléments 10 et non pas seulement à l'extérieur comme c'est le cas avec le mode de réalisation des figures 1 et 2.

Mais on peut également, comme cela se voit sur la figure 4, utiliser plus de deux arcs 11 et 12.

On voit sur cette figure 4 que chaque élément plan 20 est formé de trois arcs 21, 22 et 23 mais il serait bien entendu possible d'utiliser quatre, cinq arcs ou même plus.

Naturellement, il faut utiliser un nombre d'éléments linéaires 1, 2, 3 et 4 en nombre suffisant au moins pour réunir les différents arcs entre eux. Sur la figure 4 on voit qu'il est nécessaire d'utiliser au moins trois éléments 24, 25 et 26. On peut, mais cela n'est pas obligatoire, utiliser d'autres éléments tels que 27 et 28 qui, eux, ne sont engagés que dans un seul trou d'un seul arc (22 et 23). On voit que le trou central de l'arc 21 est ici démuni d'élément linéaire mais il pourrait bien entendu en recevoir un.

L'explication qui vient d'être donnée montre que le nombre d'éléments linéaires n'est pas impérativement fixé à quatre mais qu'il est au contraire variable selon le mode de réalisation choisi.

Lorsque l'on a obtenu deux éléments plans 20 comme il vient d'être dit, on se retrouve dans la même situation que celle qui a été décrite précédemment en regard de la figure 1. Il suffit alors d'agir comme décrit ci-dessus pour parvenir à une position analogue à celle de la figure 2. Les éléments linéaires se croisent toujours dans une zone située entre les deux éléments plans 20 mais, bien entendu, au lieu d'obtenir un ensemble quadri-podes on obtient dans le cas de la figure 4 un ensemble penta-podes.

Les éléments plans, qu'il s'agisse des disques pleins des figures 1 et 2 ou des éléments composés d'arcs assemblés, comprennent avantageusement des pièces élastiques disposées radialement et destinées à recevoir, soit des branches de végétaux, soit des réseaux tels que grillage, filet et analogues.

On voit sur la figure 3 que chaque arc 11 et 12 comprend des pinces, respectivement 15 pour l'élément 11 et 16 pour l'élément 12, chacune de ces pinces affectant une forme générale de lyre et étant obtenue avantageusement en une seule pièce avec l'arc correspondant et les membranes correspondantes par moulage d'une matière synthétique.

Ces pinces élastiques peuvent recevoir, en vue de son maintien, une branche d'un végétal ou une maille de filet, de grillage, de treillage, etc.

Le mode de réalisation de l'invention représenté sur les figures 3 et 4 donnant à l'usager la possibilité de placer au moins deux arcs autour d'une branche de végétal ou de faire passer ultérieurement une branche d'un végétal dans la partie centrale de l'élément, il est avantageux que chacun des arcs représente un bord de hauteur substantielle au moins au droit de sa courbe de plus petit diamètre (courbe intérieure) afin de n'être pas mince et blessant.

Sur la figure 3, on voit ainsi que l'arc 11 présente un bord intérieur 17 tandis que l'arc 12 présente un bord intérieur 18.

Les bords 17 et 18 peuvent naturellement être plus ou moins hauts et peuvent se trouver non pas seulement sur une seule face de l'arc comme cela est représenté mais peuvent s'étendre non seulement au-dessous de l'arc mais également au-dessus de l'arc de sorte que ces bords placés face à face lorsque les arcs sont assemblés constituent une sorte de manchon vertical.

On pourrait également prévoir des bords comparables aux bords 17 et 18 le long de leur périphérie extérieure pour que les éléments plans ne soient pas blessants pour les végétaux voire même coupants.

On note que la présence des bords 17 et 18 ainsi qu'éventuellement de bords extérieurs a pour effet supplémentaire de rigidifier les éléments et de les rendre, par conséquent, plus robustes.

En se reportant maintenant à la figure 5, on voit un ensemble conforme à l'invention identique à celui de la figure 2 mais auquel on a donné des proportions plus proches de celles de la réalité pour illustrer un avantage important de l'invention qui réside dans le fait que les éléments 5 et 6 peuvent librement coulisser le long des éléments linéaires 1, 2, 3 et 4 afin d'obtenir un réglage de la hauteur de la zone de croisement et un réglage de l'écartement désiré pour la base de l'ensemble.

On voit sur cette figure 5 que les éléments plans 5 et 6 sont placés tous deux plus près de l'extrémité supérieure des éléments linéaires que de leur base.

Il est facile, en effet, lorsque les éléments se trouvent dans la position de la figure 1 de faire glisser les éléments plans 5 et 6 pour les situer à une hauteur arbitraire quelconque. En prévoyant que les éléments plans 5 et 6 sont très près du sommet des éléments linéaires 1, 2, 3 et 4 on obtient un ensemble particulièrement stable du fait qu'alors l'extrémité inférieure des éléments linéaires 1, 2, 3 et 4 se trouve très écartée par rapport au centre de l'ensemble et que celui-ci a une base très large et donc stable. Corrélativement les quatre sommets des éléments linéaires sont très rapprochés.

Si les deux éléments plans 5 et 6 étaient situés symétriquement par rapport au milieu des éléments linéaires, l'ensemble mis dans la position active (figures 2 et 5) aurait un sommet égal à la base c'est-à-dire que les extrémités des éléments linéaires auraient le même écartement à leurs sommets et à leurs bases.

En se reportant maintenant à la figure 6, on voit une variante selon laquelle on utilise toujours quatre éléments 1, 2, 3 et 4 mais trois éléments plans au lieu de deux.

On voit ainsi que la partie inférieure de la figure 6 correspond à ce qui a été décrit plus haut c'està-dire que les éléments 1, 2, 3 et 4 sont engagés dans les trous de deux éléments plans 5 et 6. Mais, en outre, on a prévu un troisième élément 5' qui est mis en place en même temps que les deux précédents (lorsque l'ensemble est dans la position de la figure 1) de telle sorte que l'on obtient deux croisements des éléments linéaires d'une part entre les éléments plans 5 et 6, et d'autre part, entre les éléments plans 5 et 5'.

Entre les éléments 5 et 6 qui sont plus écartés l'un de l'autre que les éléments 5 et 5', on crée une sorte de cage formée par le galbe convexe des éléments linéaires 1, 2, 3 et 4.

Cette disposition est avantageuse soit pour donner un volume latéral aux végétaux qui poussent sur l'ensemble, soit pour placer à l'intérieur de cette cage un réservoir d'eau, par exemple ou autres dispositifs accessoires.

Comme on l'a dit plus haut, il est possible de placer les éléments 5, 5' et 6 à un endroit arbitraire quelconque le long des éléments linéaires de sorte que l'on choisit cet emplacement en fonction du but recherché.

Sur la figure 6 on a représenté un exemple selon lequel on obtient une base très large pour l'ensemble et un sommet relativement restreint.

En se reportant maintenant à la figure 7, on voit schématiquement l'utilisation de deux ensembles conformes à l'invention, respectivement 30 et 31, qui sont mis en position active comme on l'a dit plus haut puis enfoncés dans la terre et qui servent de support à un réseau 32 tel qu'un filet, un grillage, un treillage ou autres.

L'assujettissement du réseau 32 se fait soit au moyen de ligatures, soit en engageant les mailles du réseau sur les extrémités des éléments linéaires, soit en plaçant les mailles dans des éléments radiaux tels que les pinces 15 et 16 de la figure 3.

Sur cette figure 7 on constate qu'il n'existe que trois éléments linéaires de sorte que chaque ensemble est tri-podes mais on obtient toujours l'un des avantages essentiels de l'invention, à savoir une base large et solide, du fait que les éléments linéaires sont enfoncés dans la terre tandis que le sommet est plus ou moins restreint selon que les éléments transversaux sont placés plus ou moins près de ce sommet.

Enfin, en se reportant à la figure 8, on voit une variante selon laquelle les éléments linéaires 40 et 41 traversent les trous de trois éléments plans, tous les éléments plans se situant selon trois niveaux de telle manière que plusieurs ensembles conformes à l'invention sont juxtaposés et combinés par insertion d'au moins un élément linéaire d'un premier ensemble dans un élément plan d'un deuxième ensemble voisin, de sorte que, deux ensembles voisins comprennent au moins trois éléments linéaires chacun et quatre éléments plans disposés aux quatre angles d'un losange imaginaire.

On voit sur la figure 8 que les éléments 40 et 41 situés obliquement dans le plan de la figure, traversent des éléments plans 42 d'un niveau inférieur, puis des éléments 42 d'un niveau intermédiaire et enfin des éléments 42 d'un niveau supérieur tandis que des éléments 43 placés obliquement dans un plan perpendiculaire à celui de la figure ne traversent que les éléments 42 de niveau intermédiaire.

On obtient de la sorte un véritable réseau étendu latéralement et non plus un ensemble substantiellement vertical, ce qui est particulièrement avantageux pour obtenir la pousse des végétaux selon des massifs, des haies, etc.

Avec cette variante, on dispose encore de l'avantage décrit plus haut selon lequel on peut régler le niveau des éléments 42. On peut placer ceux-ci non plus à des niveaux alignés, comme représenté, mais à des niveaux variables pour obtenir différentes inclinaisons des éléments 40, 41 et 43 et des espaces de différentes étendues.

L'invention n'est pas limitée aux seuls modes de réalisation décrits et représentés mais en embrasse au contraire toutes les variantes.

11

REVENDICATIONS DE BREVET

1. Ensemble destiné à constituer un support substantiellement vertical tel qu'un tuteur pour des végétaux, un piquet pour des grillages et filets et analogues, caractérisé en ce qu'il comprend au moins deux éléments linéaires et au moins deux éléments plans traversés par des trous qui doivent recevoir les éléments linéaires, les éléments plans devant être orientés l'un par rapport à l'autre de telle manière qu'en position active chaque élément linéaire traverse deux trous appartenant chacun à l'un des éléments plans en s'étendant obliquement par rapport aux éléments plans, les éléments linéaires devant se croiser dans une zone située entre les deux éléments plans.

2. Ensemble selon la revendication 1, caractérisé en ce que les éléments plans sont constitués chacun par un disque traversé de trous.

3. Ensemble selon la revendication 1, caractérisé en ce que les éléments plans sont constitués chacun par au moins deux arcs qui doivent être associés de telle manière qu'un même élément linéaire traverse deux trous alignés appartenant chacun à un arc.

4. Ensemble selon l'une quelconque des revendications 1 à 3 ci-dessus, caractérisé en ce qu'un élément plan au moins comprend des pièces élastiques disposées radialement et destinées à recevoir soit des branches de végétaux, soit des réseaux tels que grillages, filets et analogues.

5. Ensemble selon la revendication 3, caractérisé en ce que les arcs présentent un bord de hauteur substantielle au moins au droit de leur courbe de plus petit diamètre afin de n'être pas minces et blessants.

6. Ensemble selon l'une quelconque des revendications 1 à 5 ci-dessus, caractérisé en ce que les trous sont constitués, au moins pour certains d'entre eux, par des membranes élastiques coupées par des fentes diamétrales sécantes.

7. Ensemble selon l'une quelconque des revendications 1 à 6 ci-dessus, caractérisé en ce que les éléments plans peuvent librement coulisser le long des éléments linéaires et être immobilisés à tout emplacement arbitraire de ces éléments linéaires lorsque l'ensemble est mis en position active.

8. Ensemble selon la revendication 7, caractérisé en ce que deux éléments plans sont tous deux plus proches d'une extrémité des éléments linéaires que de l'autre afin que ceux-ci soient plus écartés les uns des autres à leur base qu'à leur sommet.

9. Ensemble selon l'une quelconque des revendications 1 à 8 ci-dessus, caractérisé en ce que plusieurs ensembles juxtaposés sont combinés par insertion d'au moins un élément linéaire d'un premier ensemble dans un élément plan d'un deuxième ensemble voisin, ces deux ensembles voisins comprenant au moins trois éléments linéaires chacun et quatre éléments plans disposés aux quatre angles d'un losange imaginaire.

0021962

Fig.1

Fig.2

Fig.3

_Fig. 4_

_Fig. 5_

_Fig. 6_

_Fig. 7_

_Fig. 8_

0021962

Office européen des brevets

**RAPPORT DE RECHERCHE EUROPEENNE**

Numéro de la demande
EP 80 40 0859

## DOCUMENTS CONSIDERES COMME PERTINENTS

| Catégorie | Citation du document avec indication, en cas de besoin, des parties pertinentes | Revendica-tion concernée |
|---|---|---|
| | <u>DE - A - 2 123 022</u> (GERBERDING)  * page 2, paragraphe 3 à 6; figures 1 et 2 * | 1 |
| | <u>US - A - 3 803 759</u> (HEINECKE)  * colonne 3; figure 5 * | 1 |
| | <u>US - A - 3 105 327</u> (GASPER)  * totalité du brevet * | 1 |
| | <u>CH - A - 443 768</u> (ARM)  * colonne 2, lignes 32-37; figure 5 * | 1 |

**CLASSEMENT DE LA DEMANDE (Int. Cl. 3)**

A 01 G 9/12

**DOMAINES TECHNIQUES RECHERCHES (Int. Cl. 3)**

A 01 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche La Haye | Date d'achèvement de la recherche 12 septembre 1980 | Examinateur HERYGERS |
|---|---|---|

OEB Form 1503.1  06.78